(19) Europäisches Patentamt
European Patent Office
Office européen des brevets

(11) Veröffentlichungsnummer: **0 003 820**
**A1**

(12) # EUROPÄISCHE PATENTANMELDUNG

(21) Anmeldenummer: **79100484.9**

(22) Anmeldetag: **19.02.79**

(51) Int. Cl.[2]: **C 08 J 5/12**
C 07 C 69/40, C 07 C 69/74

(30) Priorität: **21.02.78 CH 1848/78**

(43) Veröffentlichungstag der Anmeldung:
**05.09.79 Patentblatt 79/18**

(84) Benannte Vertragsstaaten:
**CH DE FR GB IT**

(71) Anmelder: **CIBA-GEIGY AG**
***Patentabteilung Postfach***
**CH-4002 Basel(CH)**

(72) Erfinder: **Batzer, Hans, Prof. Dr.**
**Rainweg 7**
**CH-4144 Arlesheim(CH)**

(72) Erfinder: **Knobloch, Gerrit, Dr.**
**Luisenweg 2**
**D-6145 Lindenfels/Odenwald(DE)**

(72) Erfinder: **Sinnreich, Joel, Dr.**
**Karlstrasse 9**
**D-6140 Bensheim/Bergstrasse(DE)**

(74) Vertreter: **Zumstein sen., Fritz, Dr. et al,**
**Bräuhausstrasse 4**
**D-8000 München 2(DE)**

(54) **Nickel- und Kobaltchelatkomplexe, Verfahren zu ihrer Herstellung, Elastomerenmischung enthaltend die Komplexe und Verfahren zur Erhöhung der Haftfestigkeit von Elastomeren auf Metall.**

(57) Nickel- und Kobaltchelatkomplexe aus einem Nickel- oder Kobaltsalz und einem Succinylobernsteinsäureester der Formel I

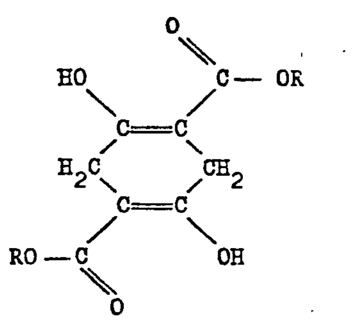

(I)

worin R einen gegebenenfalls substituierten Kohlenwasserstoffrest aliphatischen oder aromatischen Charakters bedeutet, sind hervorragende Haftverbesserer für vulkanisierten Gummi auf Metalloberflächen.

EP 0 003 820 A1

Croydon Printing Company Ltd.

3-11605/CGM 177/+

CIBA-GEIGY AG, BASEL (SCHWEIZ)

Nickel- und Kobaltchelatkomplexe, Verfahren zu ihrer Herstellung, Elastomerenmischung enhaltend die Komplexe und Verfahren zur Erhöhung der Haftfestigkeit von Elastomeren auf Metall

Die vorliegende Erfindung betrifft Nickel- und Kobaltchelatkomplexe und deren Verwendung als Haftverbesserer für vulkanisierbare Elastomere auf Metalloberflächen.

Es ist bekannt, dass Nickel- und Kobaltsalze als Haftverbesserer von vulkanisierbaren Elastomeren auf Metalloberflächen dienen. Ein solches Verfahren zur Haftverbesserung ist z.B. in der deutschen Offenlegungsschrift 2 447 853 beschrieben. Als nachteilig wird bei diesem Verfahren empfunden, dass relativ grosse Mengen der Wirksubstanzen eingesetzt werden müssen, um ausreichende Haftfestigkeiten zu erzielen, was zu unerwünschten Nebeneffekten führen kann. Aufgabe vorliegender Erfindung ist es, neue Chelatkomplexe bereitzustellen, mit denen bei geringerer Einsatzmenge gleiche Haftverbesserungen erzielt werden können.

Ein Gegenstand vorliegender Erfindung sind

Nickel- oder Kobaltchelatkomplexe aus einem Nickel- oder Kobaltsalz und einem Succinylobernsteinsäureester der Formel I

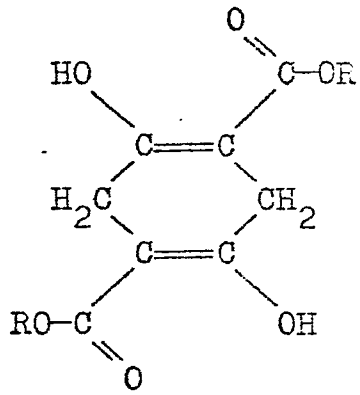

(I) ,

worin R einen gegebenenfalls substituierten Kohlenwasserstoffrest aliphatischen oder aromatischen Charakters bedeutet.

Geeignete Nickel- oder Kobaltsalze sind die Salze anorganischer oder organischer Säuren, z.B. Nitrate, Sulfate, Phosphate, Fluoride, Chloride, Bromide, Jodide, Cyanide, Cyanate. Als organische Säuren sind Carbonsäuren mit 1-30 C-Atomen, vorzugsweise 2-18 C-Atomen wie Essigsäure, Laurinsäure, Stearinsäure, Benzoesäure, Malonsäure, Phenol und Alkylphenole, Alkyl- und Arylsulfate und -sulfonate sowie Alkyl- und Arylphosphate und -phosphonate zu nennen. Als Nickel- oder Kobaltsalze eignen sich auch Ni- und Co-Komplexe mit anderen Liganden, beispielsweise Acetylacetonate, Benzoylacetonate oder Chinacridonate. Bevorzugt sind die Sulfate, Chloride, Bromide und besonders die Acetate.

R in Formel I kann in seiner Bedeutung als gegebenenfalls substituierter Kohlenwasserstoffrest aliphatischen oder aromatischen Charakters Alkyl, Alkenyl, Cycloalkyl, Aryl, Aralkyl, Alkaryl oder Alkaralkyl sein. Vorzugsweise enthält R 1-30, besonders 1-18 C-Atome. Aryl und

davon abgeleitete Reste sind bevorzugt Phenyl und seine Derivate wie Phenylalkyl, Alkylphenyl oder Alkylphenylalkyl. Geeignete Substituenten für R sind z.B. Hydroxy, Alkoxy, Alkylthio.

Wenn R in Formel I gegebenenfalls substituiertes Alkyl bedeutet, so kann dieses 1-30, vorzugsweise 1-18 C-Atome enthalten und z.B. Methyl, Aethyl, Propyl, Isopropyl, Butyl, Isobutyl, Pentyl, Hexyl, Heptyl, Octyl, 2-Aethylhexyl, Dodecyl, Octadecyl Eicosyl, ω-Hydroxyalkyl wie β-Hydroxyäthyl, γ-Hydroxypropyl, 4-Hydroxybutyl, 6-Hydroxyhexyl, Alkoxyalkyl oder Alkylthioalkyl wie ω-Alkyloxyäthyl oder ω-Alkylthioäthyl sein.

R in seiner Bedeutung als gegebenenfalls substituiertes Cycloalkyl enthält bevorzugt 5 oder 6 Ring-C-Atome. Substituenten sind z.B. Alkyl oder Hydroxy. Beispiele sind Cyclopentyl, Cyclohexyl, Methylcyclohexyl, Dodecylcyclohexyl, 4-Hydroxycyclohexyl.

R in seiner Bedeutung als aromatischer Rest kann Naphthyl, Phenyl, Alkylphenyl und Alkylbenzyl mit vorzugsweise 1-18 C-Atomen in der Alkylgruppe, Benzyl oder Phenylpropyl sein.

Die erfindungsgemässen Nickel- und Kobaltchelatkomplexe können als Molverhältnis von Metallsalz zu Succinylobernsteinsäureester die Zusammensetzung 2:1, 1:1 und 1:2 annehmen, da Succinylobernsteinsäureester zwei chelatbildende Gruppen aufweisen.

Beträgt das Verhältnis 2:1, so sind zwei Metallatome an ein Succinylobernsteinsäuremolekül gebunden, wobei die freie Valenz jedes Metallatomes durch ein organisches oder anorganisches Anion abgesättigt ist. Sie entsprechen der Struktur

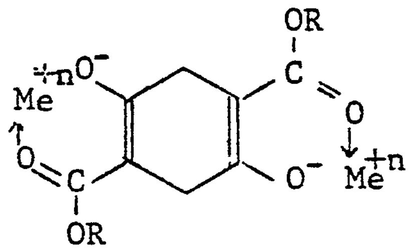

$(2n-2)X^-$

worin Me Ni oder Co n 2 oder 3 und X ein anorganisches oder organisches Anion bedeuten.

Beträgt das Verhältnis 1:1, so entspricht die Struktur der Formel

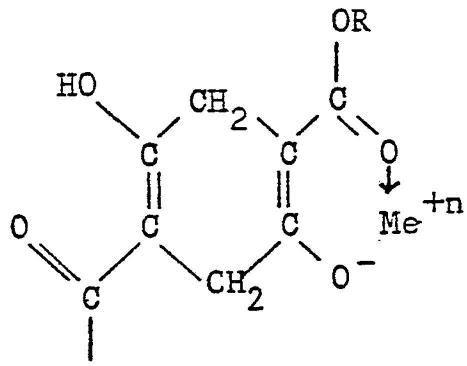

$(n-1)\ X^-$

Beträgt das Verhältnis 1:2, so ist folgende Struktur anzunehmen:

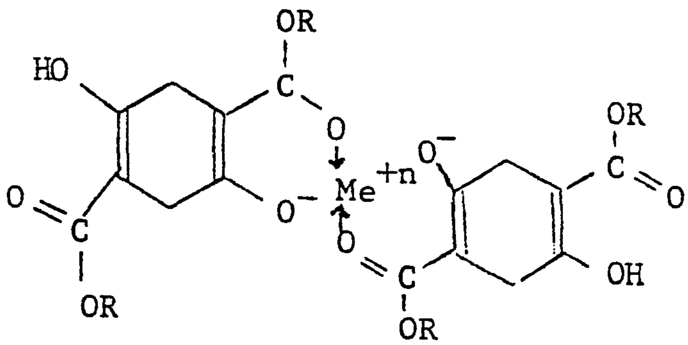

(n-2) $X^-$

Es ist aber auch möglich, dass mit dem Verhältnis 1:1 oligomere und polymere Chelatkomplexe umfasst werden. Diese können durch die folgende Formel dargestellt werden:

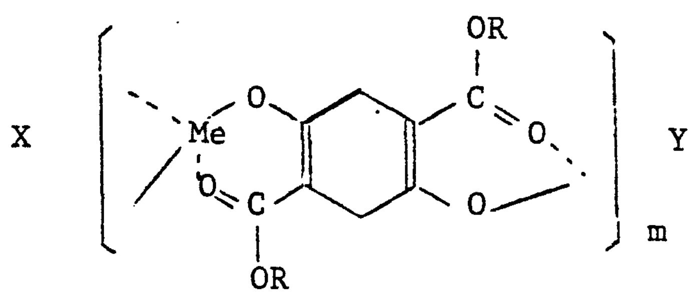

Hierin ist m eine ganze Zahl von grösser oder gleich 2, X kann ein anorganisches oder organisches Anion oder den Succinylobersteinsäurerest bedeuten und Y kann ein Wasserstoffatom oder MeX sein.

Je nach Molverhältnis der Ausgangsprodukte können auch Gemische von Komplexverbindungen vorliegen.

Die Herstellung der erfindungsgemässen Nickel- und Kobaltchelatkomplexe erfolgt in bekannter Weise durch die Umsetzung von Nickel- oder Kobaltsalzen mit Succinylobernsteinsäureestern der Formel I. Als Ni- oder Co-Salz haben sich Nickel- bzw. Kobaltacetat als besonders vorteilhaft erwiesen. Die Ester der Formel I sind bekannt, oder können durch Umesterung bei höheren Temperaturen leicht hergestellt werden aus z.B. den Methyl- oder Aethylestern.

Die Umsetzung wird vorteilhaft in Lösung vorgenommen, wobei das Lösungsmittel vorzugsweise die Salze und den Succinylobernsteinsäureester löst. Geeignete Lösungsmittel sind polare aprotische und protische Lösungsmittel wie Aether, Alkohole (zur Vermeidung von Umesterungen entsprechend dem Alkoholrest in der Estergruppe der Succinylobernsteinsäureester), Säureamide, Sulfone, Sulfoxide, Ketone, halogenierte Kohlenwasserstoffe.

Für die Reaktion sind höhere Temperaturen von mehr als 60° C, vorzugsweise mehr als 100° C geeignet. Im allgemeinen kann man bei Rückflusstemperatur des gewählten Lösungsmittels arbeiten.

Die gewünschten erfindungsgemässen Komplexe können in üblicher Weise durch Fällung, Waschungen zur Entfernung von unumgesetzten Reaktanden und des Lösungsmittels und schliesslichem Trocknen gereinigt werden.

Die erfindungsgemässen Metallchelatkomplexe sind thermisch beständig und verbessern schon bei geringer Einsatzmenge die Haftung zwischen Metalloberfläche und vulkanisiertem Elastomer.

Erfindungsgemäss wird somit auch ein Verfahren beschrieben, um eine vulkanisierbare Elastomeren-Mischung an eine Metalloberfläche während der Vulkanisation zu binden, dadurch gekennzeichnet, dass man zu einer vulkanisierbaren Elastomeren-Mischung eine Verbindung der Formel I in einer Menge von 0,05-10 Gew.-%, bezogen auf das Gewicht des Elastomeren, gibt, vorzugsweise 0,05-5,0 % und insbesondere 0,1-3%, und die Mischung vulkanisiert, während sie in Kontakt mit der Metalloberfläche ist, um eine starke und dauerhafte Bindung zu erzielen.

Die ungesättigte vulkanisierbare Elastomeren-Mischung kann hergestellt werden, indem man die Bestandteile der Mischung in üblicher Weise in einem Mischer mischt, z.B. in einem Banbury-Mischer, Extruder und/oder auf einem 2-Walzen-Mischwerk. Nach dem Mischen wird die Mischung auf die Metalloberfläche gebracht und vulkanisiert. Nach Aufbringen auf die Metalloberfläche wird die Mischung normalerweise bei einer Temperatur von 140-180° C vulkanisiert. Die Vulkanisationszeit kann entsprechend der Vulkanisationstemperatur und den gewünschten Eigenschaften des Vulkanisats variiert werden, wie dies bekannt ist. Allgemein wird mit längerer Vulkanisationszeit die Haftung erhöht. Die Erfindung betrifft ferner das Produkt dieses eben beschriebenen Verfahrens.

Die Verbindungen der Formel I können zusammen mit irgendeinem vulkanisierbaren Elastomeren verwendet werden. Alle natürlichen und synthetischen Kautschuke sind erfindungsgemäss verwendbar. Elastomere sind z.B. Polydiene, wie Polybutadien oder Polyisopren einschliesslich Naturkautschuk, Copolymere von Dienen wie Butadien oder Isopren mit anderen copolymerisierbaren Monomeren (wie Styrol, Alpha-methylstyrol, Acrylestern, Methylisopropenylketon, Isobutylen, Acrylnitril oder ungesättigten Carbonsäuren), halogenierter Kautschuk, wie Polychloropren oder Fluor-Kautschuke, Copolymere von einem oder mehreren Monoolefinen mit einem Momomer, das ungesättigte Gruppen in das Copolymere bringt, z.B. ein ungesättigtes Aethylen/Propylen-Copolymer, wie ein Aethylen/Propylen/Dicyclopentadien-Terpolymer, Schwefel-vulkanisierbarer Polyurethan-Kautschuk, Butyl-Kautschuk mit mindestens 0,8 % Unsättigung, und Kombinationen der obigen Elastomeren, z.B. Naturkautschuk/Butadien-Styrol-Copolymermischungen, eine Mischung eines gesättigten Copolymeren von Aethylen und

Propylen mit einem ungesättigten Copolymeren von Aethylen, Propylen und einem Monomer,das ungesättigte Gruppen in das Copolymere bringt.

Zusätzlich zu den Verbindungen der Formel I können die erfindungsgemässen Mischungen andere herkömmliche Additive enthalten, wie Beschleuniger, Aktivatoren, Anti-Bruchmittel, Antioxidantien, Antiozonantien, Flammhemmer, Antistatika, Dispergiermittel, Streckmittel, Füllstoffe, innere Schmiermittel, Weichmacher, Verarbeitungshilfsmittel, Hemmstoffe, Kleber, Vulkanisiermittel, Pigmente usw.. Diese herkömmlichen Bestandteile und Additive werden zu dem Elastomeren-Material in geeigneter Menge in üblicher Weise zugegeben, um eine vulkanisierbare Mischung auf der Basis des gewählten Elastomeren zu erzielen.

Die vulkanisierbare Mischung, die erfindungsgemäss haftet, enthält bevorzugt Russ. Die Menge Russ hängt von der gewünschten Art des Produkts ab. Bevorzugt sind Russmengen von 25-80 Gewichtsteile Russ pro 100 Gewichtsteile Elastomer in der Mischung.

Die Verwendung von Schwefel als Vulkanisiermittel ist bevorzugt, da er bekanntlich die Haftung zwischen der Elastomeren-Mischung und dem Metall erleichtert, insbesondere bei Messing- oder Zink- belegten Metallen. Die Menge Schwefel in der synthetischen Kautschukmischung kann 0,1-25 Gewichtsteile, bevorzugt 0,5-10 Gewichtsteile pro 100 Gewichtsteile vulkanisierbares Elastomer betragen. Die Verwendung der erfindungsgemässen Verbindungen gestattet es, wenig Schwefel in der Mischung vorzusehen.

Beispiele für erfindungsgemäss verwendbare Beschleuniger sind Mercaptobenzothiazol oder N-Cyclohexylbenzothiazol-2-sulphenamid, z.B. in einer Menge von 0,1-6,0 Gewichtsteile

pro 100 Gewichtsteile Elastomer.

Metalloberflächen, an die die Elastomeren-Mischung gebunden wird, sind z.B. Eisen bzw. Stahl, Kobalt, Nickel, Kupfer, Zink, Titan, Vanadium, Chrom, Zinn und deren Legierungen, insbesondere Messing und Bronze. Bevorzugt sind Stahl oder Messing-, Bronze- oder Zink-plattierter Stahl. Es ist nicht nötig, die Metalloberfläche aufzurauhen, bevor die Mischung aufgetragen wird, da die Bindung zwischen Mischung und Metall nicht mechanisch ist. Es ist aber bevorzugt, die Metalloberfläche von Fett und Schmutz zu befreien, bevor die Mischung aufgetragen wird.

Die erfindungsgemässen Nickelkomplexe eignen sich auch zur Lichtstabilisierung von Polyolefinen.

Die folgenden Beispiele erläutern die Erfindung.

Beispiel 1

7,7 g (0,03 Mol) Succinylobernsteinsäurediäthylester (SB) werden in 200 ml heissem Aethanol gelöst ($N_2$-Atmosphäre). Zu dieser Lösung werden 13 g (0,06 Mol) Nickelacetat gegeben und danach 30 Min. unter Rückfluss erhitzt. Der gebildete Niederschlag wird abfiltriert und durch Soxhlet-Extraktion mit Aceton zur Entfernung von überschüssigem SB und danach mit Wasser gereinigt und im Vakuum getrocknet. Das erhaltene Produkt (10 g) hat einen Nickelgehalt von 18,4 % (theoretischer Wert für einen 1:1-Komplex: 18,7%).

Beispiel 2

10,2 g (0,04 Mol) SB werden in 150 ml Methylcellosolve gelöst und hierzu eine Lösung von 12,8 (0,04 Mol) Kobaltacetat in 400 ml Methylcellosolve gegeben. Danach wird 30 Minuten unter Rückfluss erhitzt ($N_2$-Atmosphäre). Der gebildete Niederschlag wird abfiltriert und wie in Beispiel 1 gereinigt. Man erhält 8,5 g eines Produktes mit 18,4 % Kobaltgehalt (theoretischer Wert für 1:1-Komplex: 18,7 %).

Beispiel 3

Gemäss Beispiel 1 werden 24,1 g (0,07 Mol) Succinylobernsteinsäuredi-(6-hydroxyhexyl)ester und 44,8 g (0,144 Mol) Nickelacetat umgesetzt. Das erhaltene Produkt (19 g) hat einen Nickelgehalt von 12,6 % (theoretischer Wert für einen 1:1-Komplex: 12,8%).

## Beispiel 4

Gemäss Beispiel 1 werden Succinylobernsteinsäuredioctylester (12,7 g, 0,03 Mol) und 4,7 g (0,015 Mol) Nickelacetat zur Reaktion gebracht. Das erhaltene Produkt hat einen Nickelgehalt von 10,2% (theoretischer Wert für 1:1-Komplex:10,1%).

## Beispiel 5

Gemäss Beispiel 1 werden Succinylobernsteinsäuredioleylester und Nickelacetat (Molverhältnis 2:1) umgesetzt. Das erhaltene Produkt hat einen Nickelgehalt von 7,7%, was dem theoretischen Wert für einen 1:1-Komplex entspricht.

## Beispiel 6

Gemäss Beispiel 1 werden Succinylobernsteinsäure-di-(epoxyoleyl)-ester und Nickelacetat (Molverhältnis 2:1) umgesetzt. Der erhaltene Nickelkomplex hat einen Nickelgehalt von 7,3%, was dem theoretischen Wert für einen 1:1-Komplex entspricht.

Beispiel 7

Prüfung von Haftvermittlern für Kautschuk-Metall

I. Rezeptur

| | Teile | |
|---|---|---|
| Naturkautschuk (SMR 5L) | 100,0 | Grundmischung |
| Russ (Philback N 550) | 60,0 | |
| Zinkoxid | 5,0 | |
| Stearinsäure | 1,0 | |
| Aromatisches Weichmacheröl (Naftolen ZD, Metallgesellschaft AG, Frankfurt) | 5,0 | |
| Schwefel | 1,2 | Vulkanisationssystem |
| Benzothiazyl-2-cyclohexyl-sulfenamid | 0,8 | |
| Tetramethylthiuramdisulfid | 0,4 | |

II. Mischungsherstellung:

Die Grundmischungen wurden in einem Laborinnenmischer Typ LH 1 (Werner & Pfleiderer) wie folgt hergestellt:

Füllfaktor 1,1; Drehzahl 70 rpm; Knetkammertemperatur 40°C

| Mischplan: | Zeit in Minuten |
|---|---|
| 1. Mastizieren des Kautschuks | 1,0 |
| 2. Einarbeiten von Stearinsäure, 1/3 Russ und 1/3 Oel | 2,0 |
| 3. Einarbeiten von ZnO, 1/3 Russ und 1/3 Oel | 2,0 |
| 4. Einarbeiten von 1/3 Russ und 1/3 Oel | 2,0 |
| 5. Fertigmischen | 0,5 |
| Gesamtmischzeit in Minuten | 7,5 |
| Mischungsendtemperatur in °C | 130 |

Jeweils drei Ansätze aus dem Innenmischer (ca. 3,5 kg) wurden auf einem Walzwerk etwa 2 Minuten homogenisiert (Walzengrösse 200 x 450 mm, Temperatur 40° C, (Friktion 1:1,25) und dann die Vulkanisationssysteme eingemischt (Mischzeiten 10-12 Minuten).

III. Herstellung der Testkörper

Die so erhaltenen Fertigmischungen wurden portioniert, die auf Teile Kautschuk berechneten Mengen der Haftvermittler auf einem Mischwalzwerk (Walzengrösse 100x200 mm, Temperaturen wie oben) eingemischt und Felle von 5-6 mm Dicke ausgezogen, aus denen zwei Streifen von je 13 x 203 mm (ca. 10 g) geschnitten wurden.

Vermessingter Stahlcord, bestehend aus 5 Einzeldrähten zu 0,22 mm Durchmesser (Messing enthaltend 68 % Kupfer) wurde vor der Verwendung 30 Minuten in Dichlormethan entfettet und anschliessend 20-30 Minuten getrocknet.

Die Vulkanisationsform wurde in einer hydraulischen Heizpresse etwa 3 Minuten vorgewärmt und dann in folgender Reihenfolge gefüllt: Messing-Verstärkungsplatte, Streifen der Kautschukmischung, vermessingter Stahlcord, Streifen der Kautschukmischung, Messing-Verstärkungsplatte und dann Deckplatte der Vulkanisierform.

Die Vulkanisationstemperatur betrug 140° C.
Die Vulkanisationszeiten ergaben sich aus $T_{95}$ der Rheometerkurven (Zeit bis zum Erreichen von 95 % des maximalen Drehmomentes) plus einem Zeitzuschlag von 1/3 $T_{95}$.

Die aus dem Testkörper herausragenden Drahtenden wurden an der einen Schmalseite abgeschnitten und die Schmalseite abgeschliffen. Die aus der anderen Schmalseite herausragenden Drähte wurden mit einem Skalpell sorgfältig von Gummiresten gesäubert.

IV. Prüfmethode

Die Testkörper wurden 18-24 Stunden bei Raumtemperatur gelagert. Mit Hilfe einer Universal-Zugprüfmaschine RK 1000 der Fa. Roell & Karthaus wurden die einvulkanisierten Drähte entsprechend ASTM-Test D 2229-73 unter Berücksichtigung der von A.E. Hicks in Rubber Chemistry and Technology, 45, 26-48 (1972) beschriebenen Modifikationen aus dem Gummiblock herausgezogen.

V. Auswertung

Die in der Tabelle angegebenen Werte sind die auf 1 mm Probendicke berechneten durchschnittlichen Kräfte in Newton, die zum Herausziehen der Drähte aus dem Gummiblock notwendig sind. Der Blank-Wert ist der Durchschnitt aus allen im Verlauf dieser Untersuchungen gemessenen Nullwerte, d.h. aus den Resultaten mit den Vulkanisaten ohne Haftvermittler.

Tabelle

| Haftvermittler | Haftwerte (N/mm) |
|---|---|
| Blank-Wert | 2,9 |
| 0,5% Ni-Acetat | 9,3 |
| 1,0% Ni-Acetat | 19,6 |
| 0,5% Ni-Bis[(3,5-ditertiärbutyl-4-hydroxybenzyl)phosphonsäure-äthylester]dihydrat | 12,8 |
| 1,0% Ni-Bis[(3,5-ditertiärbutyl-4-hydroxybenzyl)phosphonsäure-äthylester]dihydrat | 27,5 |
| 0,5% Kobaltnaphtenat | 12,8 |
| 1,0% Kobaltnaphtenat | 18,6 |
| 0,5% Verbindung gemäss Beispiel 1 | 24,5 |
| 1,0% Verbindung gemäss Beispiel 1 | 30,4 |

## Patentansprüche

1. Nickel- oder Kobaltchelatkomplexe aus einem Nickel- oder Kobaltsalz und einem Succinylobernsteinsäureester der Formel I

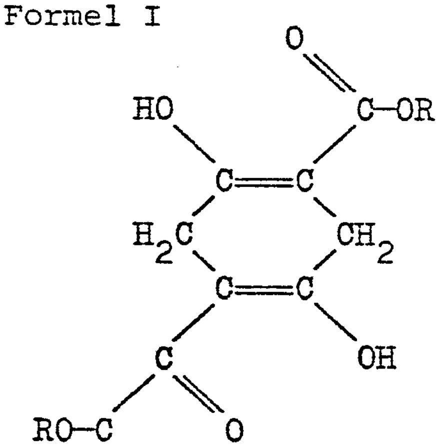

(I) ,

worin R einen gegebenenfalls substituierten Kohlenwasserstoffrest aliphatischen oder aromatischen Charakters bedeutet.

2. Komplexe gemäss Anspruch 1, dadurch gekennzeichnet, dass es sich um 2:1-, 1:2- und besonders 1:1-Komplexe handelt, bezogen auf das Molverhältnis von Metallsalz und Succinylobernsteinsäureester.

3. Komplexe gemäss Anspruch 1, dadurch gekennzeichnet, dass es sich bei den Nickel- oder Kobaltsalzen um die Acetate, Sulfate, Chloride oder Acetylacetonate handelt.

4. Komplexe gemäss Anspruch 1, dadurch gekennzeichnet, dass R Alkyl, Hydroxyalkyl, Cycloalkyl, Aryl, Aralkyl, Alkaryl oder Alkaralkyl ist.

5. Verfahren zur Herstellung von Nickel- oder Kobaltchelatkomplexen gemäss Anspruch 1, dadurch gekennzeichnet, dass man eine Lösung eines Nickel- oder Kobaltsalzes mit einem Succinylobernsteinsäureester der Formel I umsetzt und den gebildeten Chelatkomplex isoliert.

6. Vulkanisierbare Elastomerenmischung, enthaltend neben üblichen Zusätzen 0,05-10 Gew.-%, vorzugsweise 0,05-5 Gew.-%, bezogen auf das Elastomer, eines Nickel- und/oder Kobaltchelatkomplexes gemäss Anspruch 1.

7. Verfahren zur Erhöhung der Haftfestigkeit von vulkanisierbaren Elastomerenmischungen auf Metalloberflächen, dadurch gekennzeichnet, dass man der Elastomerenmischung neben üblichen Zusätzen 0,05- 10 Gew.-% eines Nickel- und/oder Kobaltkomplexes gemäss Anspruch 1 zugibt und die Mischung vulkanisiert, während sie im Kontakt mit einer Metalloberfläche ist.

8. Verfahren gemäss Anspruch 7, dadurch gekennzeichnet, dass das vulkanisierbare Elastomere Naturkautschuk, Polyisopren, Polybutadien, Styrol-Butadien-Copolymer Aethylen-Propylen-Terpolymer, Isobutylen-Isopren-Copolymer oder ein Verschnitt obgenannter Elastomere ist.

9. Verfahren gemäss Anspruch 7, dadurch gekennzeichnet, dass das Elastomere Russ enthält.

10. Verfahren gemäss Anspruch 7, dadurch gekennzeichnet, dass das Vulkanisiermittel Schwefel ist.

Europäisches Patentamt

# EUROPÄISCHER RECHERCHENBERICHT

Nummer der Anmeldung

EP 79 100 484.9

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| A,D | DE - A - 2 447 853 (CIBA-GEIGY)<br>* Anspruch 1; Seite 16, Zeilen 19 bis 27, Seite 17, Seite 18, Zeilen 1 bis 21 *<br>-- | 6, 8-10 | C 08 J 5/12<br>C 07 C 69/40<br>C 07 C 69/74 |
| A | DE - A - 2 651 939 (NIPPON-GOHSEI)<br>* Anspruch 1 *<br>-- | 1 | |
| A | Chemical Abstracts Band 87, Nr. 15, 1977<br>Columbus, Ohio, USA<br>K. GOTO et al. "2,5-Dihydroxy-1,4-cyclohexadiene-1,4-dicarboxylate esters"<br>Seite 576, Spalte 1, Abstract Nr. 117637a<br>& JP - A - 7 759 135 (SHOWA DENKO)<br>---- | | RECHERCHIERTE SACHGEBIETE (Int. Cl.²)<br>C 07 C 69/40<br>C 07 C 69/74<br>C 08 J 5/12 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 05.06.1979 | KNAACK |